# EUROPEAN PATENT SPECIFICATION

(11) **EP 2 802 764 B1**
(45) Date of publication and mention of the grant of the patent: **01.06.2016**
(21) Application number: 13702353.7
(22) Date of filing: 11.01.2013
(51) Int. Cl.: F02M 37/22, F02M 27/04

(54) **MAGNET ASSEMBLY**
MAGNETEINHEIT
ENSEMBLE DE MAGNETS

(30) Priority: 12.01.2012 GB 201200483
(43) Date of publication of application: 19.11.2014
(73) Proprietor: Jaguar Land Rover Limited, Coventy, Warwickshire CV3 4LF (GB)
(72) Inventor: OAG, Gavin, Whitley Coventry Warwickshire CV3 4LF (GB); WHITEMAN, Adam, Whitley Coventry Warwickshire CV3 4LF (GB); MORGAN, Paul, Whitley Coventry Warwickshire CV3 4LF (GB)
(74) Representative: Rogers, Ivan Mark
(86) International application number: PCT/EP2013/050497
(87) International publication number: WO 2013/104761

(56) References cited:
- WO-A1-03/078820
- WO-A1-2004/033378
- GB-A- 2 216 450

## Description

### FIELD OF THE INVENTION

The present invention relates to a magnet assembly for attracting and retaining particulate ferrous contaminants in liquid, in particular fuel. Aspects of the invention relate to an assembly, to a fuel delivery module, to a fuel tank and to a vehicle.

### BACKGROUND OF THE INVENTION

Contamination of liquid fuel is a problem, particularly where the means of distribution from refinery to end user relies upon transport and storage vessels of poor quality. For example the use of older steel barrels and drums may result in significant ferrous contamination, in the form of particles suspended in the fuel delivered into a vehicle fuel tank at the roadside.

Particle filters are typically provided at the fuel tank outlet, or in the fuel delivery line, so that fuel delivered to the vehicle engine is free of suspended particles which may be damaging to, for example, fuel injection apparatus. Such filters may be cleaned or replaced at a suitable service interval.

More recently vehicle manufacturers have tended to use a fuel delivery module (FDM) consisting of an electrically powered fuel pump located within the vehicle fuel tank. Such pumps can be affected by suspended contamination, and accordingly fuel is filtered at the upstream side thereof. Filtration may for example consist of a coarse mesh filter to screen visible particles, and downstream thereof a fine filter for removing particles in the non-visible range. There is a practical limit to the area of the fine filter, but typically it is sized for a very long period, and may last for the life of the vehicle without attention.

Ferrous contamination of fuel is a particular problem in some countries, and in extreme circumstances may be sufficient to block the fine filter of the FDM in a short time period. This results in a progressive reduction in the volume of fuel delivered from the FDM, and a consequent effect upon engine performance. The FDM may require to be removed from the fuel tank so that the filter can be cleaned or replaced; this is typically a complex and costly procedure.

A conventional magnet could be provided in the fuel tank to attract ferrous particles. For best effect, such a magnet should be large and close to the inlet of the FDM. However one problem with such a location is that the magnetic field of the magnet may interfere with electrical systems of the FDM. Furthermore any effect upon other electrical systems, such as a fuel level sensor must be prevented. Thus it can be appreciated that whilst a large powerful magnet is desirable, it must be at a distance from the FDM and other components to obviate interference - the greater the distance from the FDM, the further the distance from the fuel inlet, and the greater the chance that ferrous contamination will be ingested. An example of such a device is shown in GB-2216450.

Shielding measures for electrical systems which may be affected by a powerful magnet increase cost, and do not facilitate application of a solution only in the rare cases where contamination is a significant problem.

It is against this background that the present invention has been conceived. Embodiments of the invention may provide an inexpensive and effective remedy for ferrous contamination, adaptable to original equipment and for in-service requirements, and which avoids interference with electrical systems in the vicinity of a fuel pick-up. Other aims and advantages of the present invention will become apparent from the following description, claims and drawings.

### SUMMARY OF THE INVENTION

According to one aspect of the present invention, there is provided a magnet assembly for immersion in a liquid fuel containing ferrous particles, the assembly comprising a mounting having a plurality of magnets on one side thereof in a substantially common mounting plane and having north/south axes in parallel, the plurality of magnets comprising at least a pair of magnets that are spaced apart and having north/south axes of opposite direction, the arrangement being such that the magnetic field on said one side is enhanced and the magnetic field on the side of the mounting opposite the magnets is reduced.

In an embodiment, the mounting has a magnetic permeability selected such that the magnetic field of the side of the mounting opposite the magnets is reduced, and the spacing between said magnets being selected such that the magnetic field on said one side is enhanced. Said magnets may be coated to prevent corrosion by fuel thereof, in use.

In embodiments of the invention the assembly has the effect of substantially increasing the magnetic field and biasing the magnetic force to the magnet mounting side. A significant magnetic field is created substantially in the direction of the north/south axis on the magnet mounting side. In the case of a single magnet such field in the direction of the pole axis is weak since the magnetic lines of force extend between the poles of the magnet. However the invention allows lines of magnetic force between adjacent magnets, thus substantially enhancing the attraction of ferrous particles to the magnet mounting side.

Embodiments of the invention also allow substantial shielding of electrical components by arranging the mounting between the magnets and such components. The mounting may comprise a flat plate, and may be ferrous. A ferrous mounting plate can maximize the lines of magnetic force passing therethrough, so that the magnetic field on the side opposite the magnets is substantially weakened.

The overall effect is to provide a stronger and better directed magnetic field in the vicinity of a fuel pick-up of a FDM than would be the case for a conventional single magnet.

The magnets may be substantially identical. The magnets may be of neodymium (N35).

The magnets may be cylindrical, flat end faces thereof contacting said mounting. The magnets may have a diameter of 10-20mm and a height of 5-15mm. The magnets have a separation of 15mm or less.

The magnets may be coated by means of an electroless nickel plating process.

The assembly may comprise a flat rectangular plate having two magnets thereon.

The assembly may be contained within an enclosure. The enclosure may comprise a plurality of recesses, one recess for each magnet. Each recess may be defined in a projection of the enclosure, and each said projection may be spaced from a neighbouring projection.

The enclosure may comprise a body having a mouth, and a closure for the mouth. The closure may be planar and define a pocket for said mounting. The closure may be attachable and detachable from said body.

The enclosure may be of moulded plastics material.

In one embodiment a pair of neodymium magnets are provided, and contained within spaced projections of a plastics enclosure. This arrangement maximizes the surface area to which ferrous particles are attracted in use. The enclosure may have a door or like closure so that the magnet assembly may be removed therefrom, leaving ferrous debris to be brushed or washed from the outer surface of the enclosure before replacement of the magnet assembly. The enclosure may be a thin wall moulding of a durable material such as polyoxymethylene.

The number, size and spacing of magnets may be selected according to the intended duty and service life having regard to the likely extent of ferrous contamination; they may be cylindrical and have a diameter in the range 10-20mm, a height in the range 5-15mm, and a spacing in the range 3-15mm. The nature of the mounting plate, in particular the thickness thereof, is selected to reduce the effect of the magnetic field to the desired extent having regard to the nature and proximity of electrical components; it may have a thickness in the range 2-8mm.

It will be understood that the magnet assembly may be an independent component or may be integrated into another device such as a fuel delivery module. The mounting may form part of the device, so that the magnets typically project outwardly into fuel. The enclosure may also form part of another device, such as the casing of a FDM.

In another aspect, the present invention provides a fuel tank for a vehicle having a magnet assembly as described above.

The fuel tank may comprise at least one filter means for filtering particles or foreign objects from fuel contained therein, the assembly being arranged such that the enhanced magnetic field is directed substantially towards the at least one filter means.

In a further aspect, the present invention provides a fuel delivery module for a fuel tank having an assembly as described above.

The assembly may be oriented or arranged such that the mounting is disposed adjacent to or is substantially facing the fuel delivery module and/or any electrical components provided therein.

The assembly may be oriented or arranged such that the reduced magnetic field is directed substantially towards the fuel delivery module and/or any electrical components provided therein.

In a still further aspect, the present invention provides a fuel tank comprising a fuel delivery module as described above, a first, relatively coarse filter means disposed outside the fuel delivery module and a second, relatively fine filter means disposed within the fuel delivery module, the magnet assembly being oriented or arranged between the first and second filter means.

In yet another aspect, the present invention provides a vehicle having a fuel tank, a fuel delivery module or a magnet assembly as described.

Within the scope of this application it is expressly intended that the various aspects, embodiments, examples and alternatives set out in the preceding paragraphs, in the claims and/or in the following description and drawings, and in particular the individual features thereof, may be taken independently or in any combination. For example, features disclosed in connection with one embodiment are applicable to all embodiments unless such features are incompatible.

### BRIEF DESCRIPTION OF THE DRAWINGS

The present invention will now be described, by way of example only; with reference to the accompanying drawings, in which:
Fig. 1 shows a snapshot of lines of force of a typical conventional bar magnet;
Fig. 2 shows a snapshot of lines of force of a first embodiment of the invention;
Fig. 3 illustrates graphically the reduction in magnetic field strength perpendicular to the magnet mounting plane of Fig. 2;
Fig. 4 corresponds to Fig. 2, and shows a second embodiment with magnets closer together;
Fig. 5 illustrates graphically the field strength of the arrangement of Fig. 4;
Figs. 6-8 show snapshots of the lines of magnetic force of comparative arrangements of two, three and four magnet assemblies according to an embodiment of the invention;
Figs. 9-11 show in plan several configurations of magnets;
Fig. 12 is a schematic representation of a conventional fuel tank and FDM;
Fig. 13 illustrates on an enlarged scale the FDM of Fig. 12 and a magnet assembly of an embodiment of the invention;
Fig. 14 shows in transverse section a casing for the magnet assembly of Fig. 2; and
Fig. 15 shows the casing of Fig. 14 in plan.

### DETAILED DESCRIPTION OF EMBODIMENTS

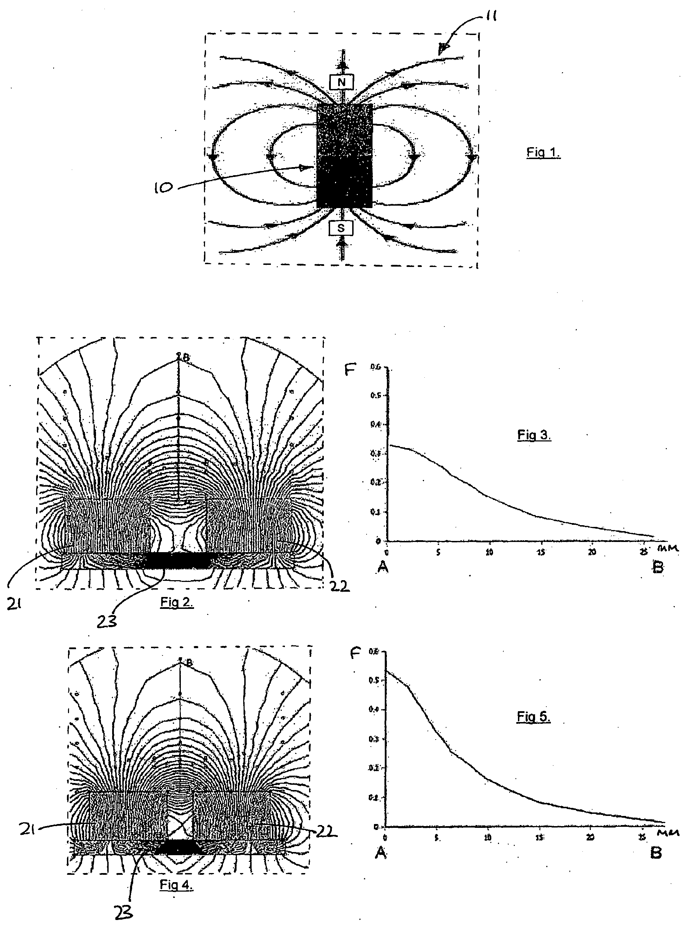

With reference to the drawings, Fig. 1 illustrates a conventional bar magnet 10 having opposed north and south poles between which extend magnetic field lines 11. The force by which ferrous material is attracted to the magnet varies depending the strength of the magnetic field, and it will be observed that the field is relatively weak in the direction of the north/south pole axis.

An embodiment of the invention is illustrated in Fig. 2, and comprises two magnets 21, 22 placed side by side on a flat ferromagnetic plate 23, and at a separation. In the example of Fig. 2 the magnets are cylindrical and have a diameter of 15mm and a depth of 10mm; the separation distance is 10mm. The plate 23 is about 3.6mm thick.The magnets are neodymium (N35), and are plated to prevent corrosion in use. In particular, the magnets may be coated by means of an electroless nickel plating process. Electroless Ni-Cu-Ni plating may be used to produce a triple coating on the surface of the magnet which encapsulates the magnet so as to provide resistance against corrosion when the magnet is submerged in liquid fuel, such as petrol or diesel fuel.

The north/south pole axes are parallel, but arranged oppositely, as illustrated. In this configuration magnetic field lines extend between the magnets and substantially increase the magnetic field strength in the general direction of the north/south pole axis.

Fig. 3 illustrates the magnetic force (F) along the pole axis between points A and B of Fig. 2, and shows that this force is about 0.33 Tesla at point A, reducing to about 0.03 Tesla at point B; points A and B are about 25mm apart.

Fig. 4 shows the same magnet configuration as Fig. 2, but with a reduced separation distance of 5mm. It can be seen from Fig. 5 that the magnetic force at point A is increased to about 0.53 Tesla, with a gradual reduction to about 0.03 Tesla at point B. Thus the strength of the magnetic field close to point A (0-10mm) is substantially increased without reducing the strength of the magnetic field in the near distance (10-25mm).

In the arrangements of Figs. 2 and 4 the lines of force below the magnets (as illustrated) are concentrated in the ferromagnetic plate so that the magnetic field beyond the plate is substantially weakened, i.e. the ferromagnetic plate has a higher magnetic permeability than the surrounding air such that the magnetic field lines preferentially travel through the plate, thereby reducing the strength of the magnetic field beyond the plate.

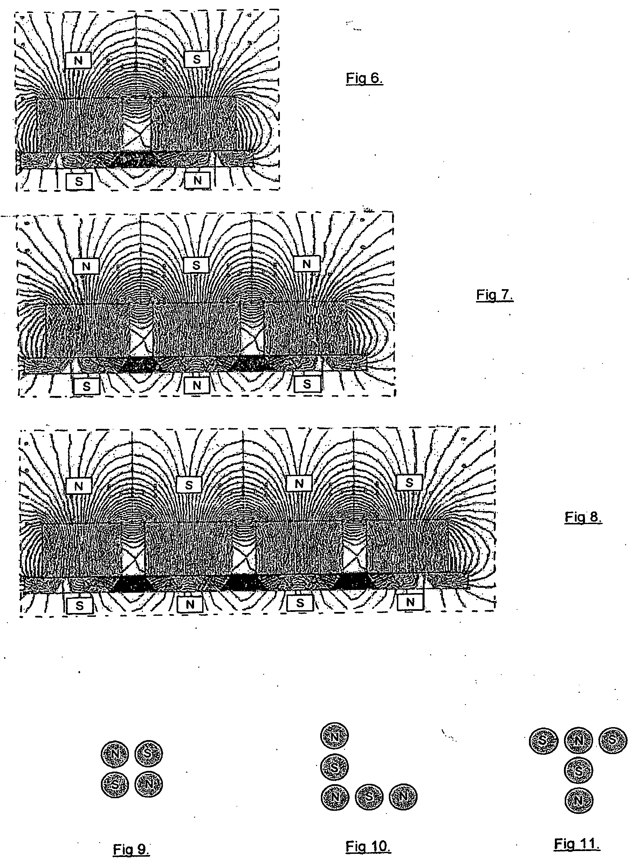

Increasing the number of magnets arranged in series (adjacent poles opposed) will increase the size and range of the magnetic field. Thus Figs. 6-8 show linear arrays of 2, 3 and 4 magnets with the corresponding magnetic fields illustrated by lines of force. Figs. 9-11 show how magnets may be arranged as a grid, an 'L', and a 'T' formation. A curved or circular linear array is also possible.

The number of magnets arranged in these ways is not restricted and can be as large as necessary according to the individual magnet size and strength, and the size of the magnetic field required. In particular a shaped array may be used to define a desirable magnetic field around a device, whilst shielding that device on the side of the mounting opposite to the magnets. For example a shaped magnetic field may be created around a fuel pump inlet of a fuel delivery module (FDM).

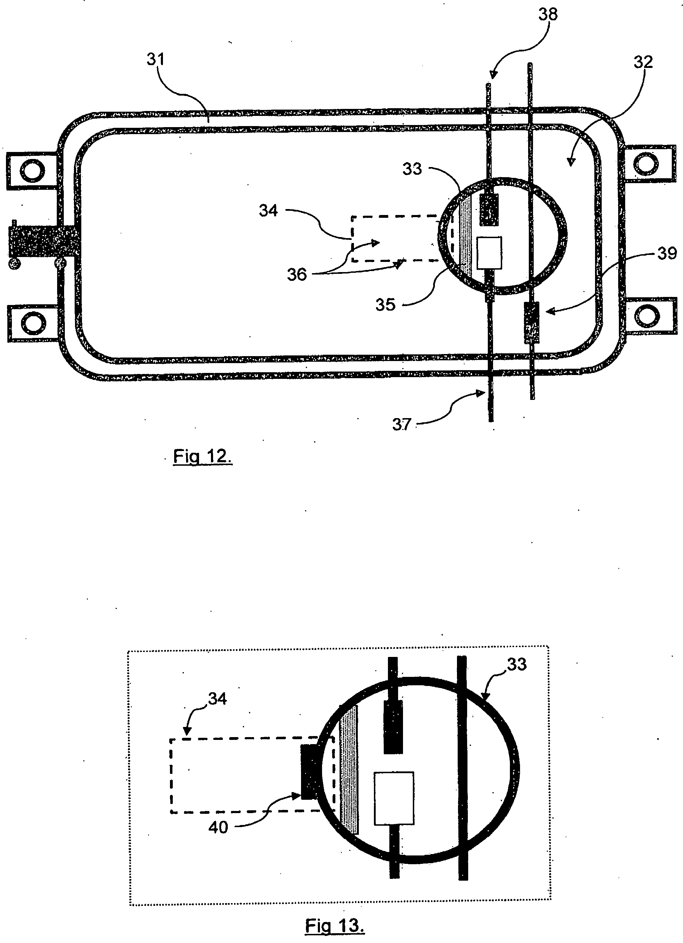

Fig. 12 illustrates schematically a fuel tank 31 incorporating a typical FDM 32 comprising a swirl pot 33 incorporating an electric pump (not illustrated). The FDM includes an external strainer 34 to exclude large debris, and an internal fine filter 35. In use fuel is drawn into the FDM, as illustrated by arrows 36 and supplied under pressure to a fuel feed line 37. A breather 38 and a purge line 39 are provided, along with other apparatus which is omitted to improve clarity. In use the FDM is tightly sealed within the fuel tank.

Fig. 13 shows the swirl pot 33 in greater detail, and in particular the location of a magnet assembly 40 according to the invention. The assembly is arranged to provide a strong magnetic field in the vicinity of the strainer 34, but to reduce the magnetic field on the side facing the swirl pot. Thus a strong magnetic field can be directed toward the strainer, whilst the mounting plate acts to prevent a strong magnetic field in the vicinity of electrical components within the FDM.

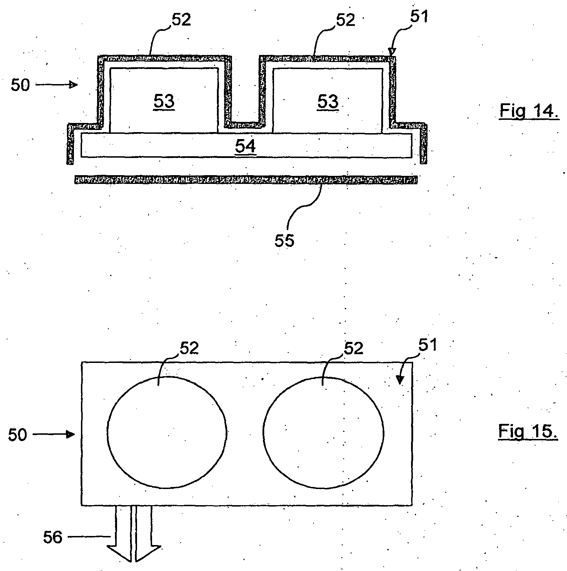

An example of a dual magnet device 50 is illustrated in Figs. 14 and 15. A moulded plastics housing (or enclosure) 51 comprises two adjacent top-hat projections 52 which each contain a close-fitting cylindrical neodymium magnet 53. The mouth of the housing 51 is rectangular and defines a pocket for a ferromagnetic mounting plate 54, to which the magnets adhere by magnetic force. A closure or lid 55 is provided to cover the plate 54, and this lid may be permanently adhered or be removable by, for example, a snap-fitting arrangement. A simple snap-in fork 56 is provided for mounting, but this is illustrated merely as one example of an attachment method; the fork engages a suitably sized aperture in use.

In use the dual magnet device is attached to the FDM by the fork 56 so as to attract ferrous particles before they are drawn into the fuel inlet, thus preventing or at least reducing the rate of blockage of the internal fine filter.

When necessary the device 50 may be removed for cleaning or replacement, and if the lid 55 is opened the magnet assembly may be removed to permit the debris to be more easily brushed or washed from the external surfaces of the top-hat sections 52.

It will be appreciated that the top-hat sections both maintain the magnets at the desired spacing, and provide an increased surface area as compared with an arrangement in which the dual magnets are contained in a single recess.

The housing and lid are of a durable material appropriate to fuel, for example an acetal copolymer such as polyoxymethylene (POM), Delrin⁽™⁾ or Hostaform⁽™⁾. The external surface is preferably smooth to facilitate cleaning thereof.

The magnet device 50 is suitable for fitting during vehicle construction, or in-service, so that the cost thereof is incurred only when necessary. Where a nonferrous mounting is used to block or reduce the magnetic field, the magnets may be attached thereto by any suitable means, for example a suitable adhesive. It will be appreciated however that a casing of the kind illustrated in Figs. 14 and 15 may render a mechanical connection unnecessary.

Although described in relation to fuel contamination, the invention may be used to remove ferrous contamination from other liquids where interference between a magnetic field and electrical equipment is a concern.

## Claims

1. A magnet assembly for immersion in a liquid fuel containing ferrous particles, the assembly comprising a mounting having a plurality of magnets on one side thereof in a substantially common mounting plane and having north/south axes in parallel, the plurality of magnets comprising at least a pair of magnets (21, 22) that are spaced apart and having north/south axes of opposite direction, the arrangement being such that the magnetic field on said one side is enhanced and the magnetic field on the side of the mounting opposite the magnets (21, 22) is reduced, wherein said magnets (21, 22) are coated to prevent corrosion thereof, in use, by said fuel.

2. An assembly according to claim 1, wherein the mounting comprises a flat plate (23).

3. An assembly according to claim 1 or claim 2, wherein the mounting is ferrous.

4. An assembly according to any preceding claim, wherein said magnets (21, 22) are of neodymium (N35).

5. An assembly according to any preceding claim, wherein said magnets (21, 22) are coated by means of an electroless nickel plating process.

6. An assembly according to any preceding claim, and contained within an enclosure.

7. An assembly according to claim 6, wherein said enclosure comprises a plurality of recesses, one recess for each magnet (21, 22).

8. An assembly according to claim 7, wherein each recess is defined in a projection of the enclosure, and each said projection is spaced from a neighbouring projection.

9. An assembly according to any one of claims 6 to 8, wherein the enclosure comprises a body having a mouth, and a closure for the mouth, optionally wherein said closure is attachable and detachable from said body.

10. An assembly according to any one of claims 11 to 16, wherein said enclosure is of moulded plastics material.

11. A fuel tank (31) for a vehicle having a magnet assembly according to any preceding claim.

12. A fuel tank according to claim 11, comprising at least one filter means (34) for filtering particles or foreign objects from fuel contained therein, the assembly being arranged such that the enhanced magnetic field is directed substantially towards the at least one filter means (34).

13. A fuel delivery module for a fuel tank having an assembly according to any one of claims 1 to 10 mounted thereto.

14. A fuel delivery module according to claim 13, wherein the assembly is oriented or arranged such that the reduced magnetic field is directed substantially towards the fuel delivery module and/or any electrical components provided therein.

15. A fuel tank comprising a fuel delivery module according to claim 13 or claim 14, a first, relatively coarse filter means disposed outside the fuel delivery module and a second, relatively fine filter means disposed within the fuel delivery module, the magnet assembly being oriented or arranged between the first and second filter means.

## Patentansprüche

1. Magnetanordnung zum Eintauchen in einen Flüssigbrennstoff, der eisenhaltige Partikel enthält, wobei die Anordnung eine Befestigung umfasst, die mehrere Magneten auf einer Seite davon in einer im Wesentlichen gemeinsamen Befestigungsebene aufweist und parallele Nord/Süd-Achsen aufweist, wobei die mehreren Magneten wenigstens ein Paar Magneten (21, 22) umfassen, die voneinander beabstandet sind und einander entgegengesetzte Nord/Süd-Achsen aufweisen, wobei der Aufbau derart ist, dass das Magnetfeld auf der einen Seite verstärkt ist und das Magnetfeld auf der Seite der Befestigung gegenüber den Magneten (21, 22) reduziert ist, wobei die Magneten (21, 22) beschichtet sind, um im Gebrauch Korrosion davon durch den Brennstoff zu verhindern.

2. Anordnung nach Anspruch 1, wobei die Befestigung eine flache Platte (23) umfasst.

3. Anordnung nach Anspruch 1 oder 2, wobei die Befestigung eisenhaltig ist.

4. Anordnung nach einem der vorhergehenden Ansprüche, wobei die Magneten (21, 22) aus Neodym (N35) bestehen.

5. Anordnung nach einem der vorhergehenden Ansprüche, wobei die Magneten (21, 22) mittels eines stromlosen Vernickelungsvorgangs beschichtet sind.

6. Anordnung nach einem der vorhergehenden Ansprüche und in einer Umhüllung enthalten.

7. Anordnung nach Anspruch 6, wobei die Umhüllung mehrere Aussparungen umfasst, eine Aussparung für jeden Magneten (21, 22).

8. Anordnung nach Anspruch 7, wobei jede Vertiefung in einem Vorsprung der Umhüllung definiert ist und jeder Vorsprung von einem benachbarten Vorsprung beabstandet ist.

9. Anordnung nach einem der Ansprüche 6 bis 8, wobei die Umhüllung einen Körper mit einem Mund und einen Verschluss für den Mund umfasst, optional wobei der Verschluss an dem Körper anfügbar und von diesem abnehmbar ist.

10. Anordnung nach einem der Ansprüche 11 bis 16, wobei die Umhüllung aus formgepresstem Kunststoff besteht.

11. Brennstofftank (31) für ein Fahrzeug mit einer Magnetanordnung nach einem der vorhergehenden Ansprüche.

12. Brennstofftank nach Anspruch 11, umfassend wenigstens ein Filtermittel (34) zum Filtern von Partikeln oder Fremdkörpern aus darin enthaltenem Brennstoff, wobei die Anordnung derart angeordnet ist, dass das verstärkte Magnetfeld im Wesentlichen zu dem wenigstens einen Filtermittel (34) hin gerichtet ist.

13. Brennstoffzufuhrmodul für einen Brennstofftank mit einer darauf angebrachten Anordnung nach einem der Ansprüche 1 bis 10.

14. Brennstoffzufuhrmodul nach Anspruch 13, wobei die Anordnung derart ausgerichtet oder angeordnet ist, dass das reduzierte Magnetfeld im Wesentlichen zu dem Brennstoffzufuhrmodul und/oder beliebigen darin bereitgestellten elektrischen Komponenten hin gerichtet ist.

15. Brennstofftank, umfassend ein Brennstoffzufuhrmodul nach Anspruch 13 oder 14, ein erstes, relativ grobes Filtermittel, außerhalb des Brennstoffzufuhrmoduls angeordnet, und ein zweites, relativ feines Filtermittel, im Brennstoffzufuhrmodul angeordnet, wobei die Magnetanordnung zwischen dem ersten und dem zweiten Filtermittel ausgerichtet oder angeordnet ist.

## Revendications

1. Ensemble aimant destiné être immergé dans un combustible liquide contenant des particules ferreuses, l'ensemble comprenant une monture ayant une pluralité d'aimants sur un côté de celle-ci dans un plan de montage sensiblement commun et ayant des axes nord/sud en parallèle, la pluralité d'aimants comprenant au moins une paire d'aimants (21, 22) qui sont espacés les uns des autres et ayant des axes nord/sud de sens opposé, l'agencement étant tel que le champ magnétique sur ledit un côté est amplifié et le champ magnétique sur l'autre côté de la monture opposée aux aimants (21, 22) est réduit, dans lequel lesdits aimants (21, 22) sont revêtus pour empêcher leur corrosion, en utilisation, par ledit combustible.

2. Ensemble selon la revendication 1, dans lequel la monture comprend une plaque plate (23).

3. Ensemble selon la revendication 1 ou la revendication 2, dans lequel la monture est ferreuse.

4. Ensemble selon l'une quelconque des revendications précédentes, dans lequel lesdits aimants (21, 22) sont en néodyme (N35).

5. Ensemble selon l'une quelconque des revendications précédentes, dans lequel lesdits aimants (21, 22) sont revêtus au moyen d'un processus de nickelage autocatalytique.

6. Ensemble selon l'une quelconque des revendications précédentes, et contenu à l'intérieur d'une enceinte.

7. Ensemble selon la revendication 6, dans lequel ladite enceinte comprend une pluralité d'évidements, un évidement pour chaque aimant (21, 22).

8. Ensemble selon la revendication 7, dans lequel chaque évidement est défini dans une protubérance de l'enceinte, et chaque dite protubérance est espacée d'une protubérance voisine.

9. Ensemble selon l'une quelconque des revendications 6 à 8, dans lequel l'enceinte comprend un corps ayant un bec, et une fermeture pour le bec, facultativement dans lequel ladite fermeture peut être attachée audit et détachée dudit corps.

10. Ensemble selon l'une quelconque des revendications 11 à 16, dans lequel ladite fermeture est en matière plastique moulée.

11. Réservoir de combustible (31) pour un véhicule ayant un ensemble aimant selon l'une quelconque des revendications précédentes.

12. Réservoir de combustible selon la revendication 11, comprenant au moins un moyen de filtre (34) pour filtrer les particules ou objets étrangers du combustible qui y sont contenus, l'ensemble étant agencé de sorte que le champ magnétique amplifié soit dirigé sensiblement vers le au moins un moyen de filtre (34).

13. Module de distribution de combustible pour un réservoir à combustible sur lequel est monté un ensemble selon l'une quelconque des revendications 1 à 10.

14. Module de distribution de fluide selon la revendication 13, dans lequel l'ensemble est orienté ou agencé de sorte que le champ magnétique réduit soit dirigé sensiblement vers le module de distribution de combustible et/ou tous composants électriques qui y sont fournis.

15. Réservoir de combustible comprenant un module de distribution de combustible selon la revendication 13 ou la revendication 14, un premier moyen de filtre relativement grossier disposé à l'extérieur du module de distribution de combustible et un second moyen de filtre relativement fin disposé à l'intérieur du module de distribution de fluide, l'ensemble aimant étant orienté ou agencé entre les premier et second moyens de filtre.
